# EUROPÄISCHE PATENTSCHRIFT

(11) **EP 3 926 304 B1**
(45) Veröffentlichungstag und Bekanntmachung des Hinweises auf die Patenterteilung: **26.07.2023**
(21) Anmeldenummer: 21175571.5
(22) Anmeldetag: 25.05.2021
(51) Int. Cl.: G01C 21/36, G01C 21/00, G01C 21/16, G06V 20/56

(54) **VERFAHREN ZUM BEURTEILEN EINER GENAUIGKEIT EINER POSITIONSBESTIMMUNG EINER LANDMARKE, SOWIE BEWERTUNGSSYSTEM**
METHOD FOR EVALUATING THE ACCURACY OF A POSITION DETERMINATION OF A LANDMARK AND EVALUATION SYSTEM
PROCÉDÉ DE DÉTERMINATION DE LA PRÉCISION D'UNE DÉTERMINATION DE POSITION D'UN REPÈRE, AINSI QUE SYSTÈME D'ÉVALUATION

(30) Priorität: 15.06.2020 DE 102020115746
(43) Veröffentlichungstag der Anmeldung: 22.12.2021
(73) Patentinhaber: VOLKSWAGEN AKTIENGESELLSCHAFT, 38440 Wolfsburg (DE); MAN Truck & Bus SE, 80995 München (DE)
(72) Erfinder: WILBERS, Daniel, 38440 Wolfsburg (DE); BOHLKE, Henrik, 49456 Bakum (DE); RECH, Bernd, 38556 Bokensdorf (DE); MERFELS, Christian, 38102 Braunschweig (DE); KOCH, Niklas, 38448 Wolfsburg (DE); JÜRGENS, Stefan, 38106 Braunschweig (DE); HUNGAR, Constanze, 38100 Braunschweig (DE)
(74) Vertreter: Hofstetter, Schurack & Partner

(56) Entgegenhaltungen:
- WO-A1-2018/212292
- WO-A1-2020/078572

## Beschreibung

Ein Aspekt der Erfindung betrifft ein Verfahren zum Beurteilen einer Genauigkeit einer Positionsbestimmung einer Landmarke. Ein weiterer Aspekt der Erfindung betrifft ein elektronisches Bewertungssystem.

Für die Eigenlokalisierung von autonom fahrenden Fahrzeugen sind verschiedene Konzepte bekannt. Bei einigen werden Strukturen und Muster in der Fahrzeugumgebung von den Fahrzeugsensoren erkannt und mit entsprechenden Eintragungen in einer digitalen Karte verglichen. Derartige Strukturen werden auch als Landmarken bezeichnet. Diese Konzepte setzen voraus, dass die Fahrzeuge mit aktuellen und verifizierten Landmarken-Karten ausgestattet sind.

Um diese digitalen Karten aktuell zu halten, können beispielsweise Messdaten von speziellen Messfahrzeugen oder von Fahrzeugen aus der Fahrzeugflotte auf einem Backend aggregiert und anschließend Veränderungen festgestellt werden. Die festgestellten Abweichungen können dann als Aktualisierung der Karte an die Fahrzeuge ausgegeben werden.

Alternativ ist es möglich, dass jedes Fahrzeug für sich eine interne Karte pflegt, Abweichungen zwischen der Karte und seinen Messungen selbst feststellt und bewertet und selbst Aktualisierungs-Hypothesen erzeugt. Diese Aktualisierungs-Hypothesen kann das Fahrzeug für seine Fahraufgabe und für seine Eigenlokalisierung verwenden. Zusätzlich kann es vorzugsweise diese Aktualisierungs-Hypothesen einem Backend zur Verfügung stellen, insbesondere über eine drahtlose Übertragung, insbesondere eine Funkübertragung. Bei beiden Alternativen ist erforderlich, dass diese Veränderungen an den digitalen Karten keine systematischen Fehler enthalten und innerhalb der Fehlertoleranzen liegen. Dies ist insbesondere für einen Langzeitbetrieb wichtig. Dies stellt eine wesentliche Voraussetzung der automatischen Fahrfunktion eines Fahrzeugs dar, welche abhängig von der Positionsschätzung des Fahrzeuglokalisierungssystems sind.

Aus der DE 10 2016 225 213 A1 sind ein Verfahren und ein System zur Lokalisierung eines Kraftfahrzeugs bekannt. Das System ist zur Durchführung eines Verfahrens zur Lokalisierung eines Kraftfahrzeugs vorgesehen. Mit einer Recheneinheit des Systems erfolgt eine Erstellung von Landmarkenhypothesen. Es wird ein Kartenabgleich zwischen einer lokalen Belegungskarte und einer globalen Belegungskarte durchgeführt. Mithilfe eines Map-Matching-Algorithmus zwischen einem Umfeldmodell und der globalen Belegungskarte wird eine Schätzung der globalen Fahrzeugpose durchgeführt.

Aus der DE 10 2017 105 086 A1 ist ein Aktualisieren einer Landmarkenkarte bekannt. Für diese Klassifikation von Landmarkenvergleichsvorgängen sind verschiedene Klassen vorgesehen. Das Aktualisieren der Landmarkenkarte kann in dem Fahrzeug erfolgen.

Bei den bekannten Verfahren und Systemen werden anhand von Landmarkenhypothesen zwar digitale Karten erzeugt und aktualisiert, aber diese Aktualisierung wird nicht weiter beurteilt beziehungsweise bewertet. Ist eine derartige Aktualisierung vorgenommen, so wird sie nicht weiter überprüft. Dies kann zu Nachteilen führen. Denn aufgrund von Messfehlern und/oder anderweitigen Fehlereinflüssen können Situationen auftreten, in denen diese Aktualisierungen nachteilig sind, da sie ungenau sind.

Das Dokument WO 2018/212 292 A1 offenbart ein Verfahren zum Beurteilen einer Genauigkeit einer Positionsbestimmung einer Landmarke in einer Umgebung eines Fahrzeugs, wobei eine Information über die Genauigkeit einer gemessenen Position der Landmarke abhängig von einem Unterschied zwischen der gemessenen Position der Landmarke und einer erwarteten Position der Landmarke basierend auf Kartendaten ausgegeben wird.

Das Dokument WO2020/ 078 572 A1 offenbart das Erstellen einer lokalen Karte basierend auf Sensordaten, wobei die lokale Karte relative Positionen von Objekten in einer Umgebung eines Fahrzeugs umfasst, sowie das Erstellen einer globalen Karte, wobei die lokale Karte und die globale Karte miteinander verglichen werden und eine der beiden Karten entsprechend aktualisiert wird.

Es ist Aufgabe der vorliegenden Erfindung, ein Verfahren und ein elektronisches Bewertungssystem zu schaffen, bei welchem die Nutzung von Landmarken bei der Eigenlokalisierung verbessert ist.

Diese Aufgabe wird durch ein Verfahren und ein Bewertungssystem gemäß den unabhängigen Ansprüchen gelöst.

Ein Aspekt der Erfindung betrifft ein Verfahren zum Beurteilen einer Genauigkeit einer Positionsbestimmung einer Landmarke in einer Umgebung eines Fahrzeugs, bei welchem folgende Schritte durchgeführt werden:
- Erfassen der aktuellen Umgebung des Fahrzeugs mit zumindest einer Erfassungseinheit des Fahrzeugs in einem Erfassungsvorgang;
- Erstellen einer relativen Karte der Umgebung auf Basis der erfassten Informationen mit relativen Positionen von erfassten Landmarken in der Umgebung, insbesondere durch ein elektronisches Bewertungssystem;
- Bereitstellen einer globalen Karte der Umgebung mit globalen Positionen von Landmarken, insbesondere durch das elektronische Bewertungssystem;
- Auswählen zumindest einer erfassten Landmarke, die auch in der globalen Karte vorhanden ist, durch das elektronische Bewertungssystem;
- Berechnen, insbesondere durch das elektronische Bewertungssystem, der globalen Position dieser ausgewählten Landmarke ohne Berücksichtigung der globalen Position dieser Landmarke aus der globalen Karte aber abhängig von, insbesondere relativen und/oder globalen, Positionen anderer Landmarken, die be dem Erfassungsvorgang erfasst wurden und/oder die bei einem anderen, insbesondere vorhergehenden, Erfassungsvorgang erfasst wurden, wobei dazu die ausgewählte Landmarke unberücksichtigt bleibt;
- Vergleichen der globalen Position der ausgewählten Landmarke in der globalen Karte mit der berechneten globalen Position dieser Landmarke, insbesondere durch das elektronische Bewertungssystem, und Bestimmen einer Positionsabweichung zwischen der globalen Position und der berechneten Position durch das elektronische Bewertungssystem;
- Berücksichtigen der Positionsabweichung für die Beurteilung der Genauigkeit der Positionsbestimmung der Landmarke, insbesondere durch das elektronische Beurteilungssystem.

Durch ein derartiges Verfahren ist es in spezifizierter Weise auch ermöglicht, eine Landmarkenposition sicher und genau zu überprüfen. Dadurch lässt sich die Nutzung von Landmarken bei der Eigenlokalisierung eines Fahrzeugs verbessern. Denn es wird nun grundsätzlich die Position einer erfassten Landmarke nicht als korrekt und ungeprüft hingenommen, sondern es erfolgt nun eine Überprüfung dieser Position. Dazu bleibt die Landmarke selbst unberücksichtigt.

Insbesondere wird eine derartige Landmarke, die temporär herausgenommen wird beziehungsweise bei der Beurteilung nicht berücksichtigt wird, auch als Prüf-Landmarke bezeichnet. Ein temporäres Entfernen bedeutet insbesondere ein Entfernen bis eine Entscheidung erfolgt ist, ob die Landmarke für die Eigenlokalisierung des Fahrzeugs tauglich ist oder nicht.

Eine relative Position ist eine derartige, die durch die Erfassungseinheit des Fahrzeugs definiert wird. Die Position ist daher im Koordinatensystem des Fahrzeugs gegeben. Demgegenüber ist eine globale Position eine Position im Weltkoordinatensystem.

Die Bewertung der globalen Position ist die wichtigere. Denn sie ist diejenige, die auch einer aktualisierten digitalen Karte zugrunde gelegt wird beziehungsweise welche in die digitale Karte eingetragen wird.

Erfindungsgemäß wird bei dieser Bewertung die relative Position dieser ausgewählten Landmarke nicht berücksichtigt. Die globale Position dieser ausgewählten Landmarke wird in einer vorteilhaften Ausführung abhängig von relativen Positionen anderer Landmarken, die bei dem Erfassungsvorgang durch die zumindest eine Erfassungseinheit erfasst wurden, berechnet. Abhängig von dieser berechneten globalen Position wird vorzugsweise ein Fehlerterm bestimmt, der insbesondere einer Fehlerstatistik bereitgestellt wird. Dies ist eine besonders vorteilhafte Ausführung. Denn es wird somit diese ausgewählte Landmarke bei der Bewertung unberücksichtigt belassen. Es wird bei diesem Ausführungsbeispiel somit nicht die vorhandene globale Position dieser ausgewählten Landmarke bei der Bewertung berücksichtigt. Vielmehr wird diese globale Position nicht herangezogen, sondern anderweitig berechnet. Für diese Berechnung werden beispielsweise die relativen Positionen von anderen Landmarken herangezogen. Gerade bei der Erzeugung der Fehlerstatistik lassen sich dadurch Verbesserungen erzielen. Insbesondere sind dadurch wiederum genauere Analysen und Rückschlüsse über die Richtigkeit der globalen Position dieser ausgewählten Landmarke ermöglicht.

Es wird die berechnete globale Position der ausgewählten Landmarke mit der globalen Position dieser Landmarke aus der globalen Karte verglichen, wie diese oben bereits dargelegt wurde. Bei einem Auftreten einer Positionsabweichung zwischen diesen globalen Positionen wird diese Positionsabweichung insbesondere als Fehlerterm gebildet und bereitgestellt. Es wird insbesondere abhängig von diesen Positionsabweichungen somit ein Fehlerterm gebildet. Dieser repräsentiert dann insbesondere die bestimmte Positionsabweichung. Durch eine derartige Vorgehensweise lässt sich nicht nur hier, sondern auch bei den oben genannten vorteilhaften Ausführungen eine besonders detaillierte und genaue Bewertung vornehmen, ob eine mit Positionsabweichungen von zumindest ausgewählten Landmarken aktualisierte digitale Karte oder eine zur Aktualisierung mit derartigen Positionsabweichungen von zumindest ausgewählten Landmarken vorgesehene digitale Karte für die Eigenlokalisierung des Fahrzeugs tauglich ist. Es ist somit eine besonders genaue und tiefgehende Detailanalyse insbesondere betreffend ein Aktualisierungserfordernis der digitalen Karte ermöglicht. Insbesondere bereits aufgetretene Positionsabweichungen können in dem Zusammenhang quasi nachfolgend auch verbessert und detaillierter beurteilt werden, ob sie für die Eigenlokalisierung des Fahrzeugs in einer digitalen Karte tatsächlich tauglich sind. Insbesondere, ob die digitale Karte aktualisiert werden muss oder nicht.

In einem Ausführungsbeispiel wird abhängig von der Positionsabweichung eine Aktualisierungs-Hypothese für die Landmarke erzeugt. Dies bedeutet, dass dann, wenn eine Positionsabweichung, insbesondere größer einem Schwellwert, aufgetreten ist, eine Aktualisierungs-Hypothese erzeugt wird. Die Aktualisierungs-Hypothese kann auch für die Beurteilung der Genauigkeit der Positionsbestimmung der Landmarke berücksichtigt werden. Eine Aktualisierungs-Hypothese beschreibt ein mögliches Aktualisierungserfordernis der globalen Position der Landmarke in einer digitalen Karte, insbesondere aufgrund der aufgetretenen Positionsabweichung. Insbesondere beschreibt eine derartige Hypothese ein mögliches Aktualisierungserfordernis der digitalen, globalen Karte. Die Aktualisierung-Hypothese ist hier eine Landmarke-Positionsabweichungs-Hypothese.

In einem Ausführungsbeispiel wird die zu beurteilende Landmarke nach einem Zufallsprinzip von dem elektronischen Bewertungssystem ausgewählt. Es wird also bei diesem automatischen Beurteilungsszenario auch ein Zufallsprinzip zugrunde gelegt. Auch dadurch ist eine Verbesserung ermöglicht. Denn indem nicht nur eine spezifische Art von Landmarken für das Beurteilungsszenario zugrunde gelegt wird, kann durch diesen Zufallsgenerator eine vorteilhafte Streuung bezüglich Landmarken erfolgen, die für das Beurteilungsszenario berücksichtigt werden. Damit ist die Erstellung des Beurteilungsergebnisses repräsentativer.

In einem Ausführungsbeispiel werden zeitlich nacheinander und/oder gleichzeitig zumindest zwei verschiedene Landmarken ausgewählt und diese werden aus der globalen Karte entfernt. Für die zumindest zwei verschiedenen Landmarken wird die jeweilige globale Position berechnet. Die jeweilige berechnete globale Position wird mit der jeweiligen globalen Position verglichen und eine Positionsabweichung wird bestimmt. Die Positionsabweichungen werden für die Beurteilung der Genauigkeit der Positionsbestimmung der Landmarken berücksichtigt.

Vorzugsweise wird auf Basis der mehreren Positionsabweichungen eine Fehlerstatistik erzeugt und die Fehlerstatistik wird ausgewertet. Abhängig von der Auswertung der Fehlerstatistik wird ein Gütemaß für die Positionsabweichungen bestimmt.

In einem Ausführungsbeispiel wird die Fehlerstatistik dahingehend ausgewertet, ob die Positionsabweichungen auf einem Fehler der Erfassungseinheit beruhen, wobei die Verwendung zumindest einer Landmarke, insbesondere die Verwendung der digitalen Karte, für eine Eigenlokalisierung des Fahrzeugs, insbesondere unter Berücksichtigung eines Korrekturfehlers, bejaht wird, wenn die Positionsabweichungen auf einem Fehler der Erfassungseinheit beruhen. Dies ist ein weiterer vorteilhafter Vorgang. Denn somit können die aufgetretenen Positionsabweichungen feingliedriger und detaillierter analysiert werden. Es ist somit die Möglichkeit geschaffen, zu erkennen, worauf eine derartige Positionsabweichung gegebenenfalls beruht. Wird erkannt, dass ein derartiger Fehler aufgrund der Erfassungseinheit aufgetreten ist, so ist es dann auch ermöglicht, dass eine derartige systembedingte Abweichung bei der zukünftigen Eigenlokalisierung des Fahrzeugs berücksichtigt wird. Damit ist es dann einfach ermöglicht, die digitale Karte, die dann aktualisiert wurde, für die Eigenlokalisierung zugrunde zu legen. Denn es ist dann auch bekannt, welcher Fehler durch die Erfassungseinheit einfließt und wie dieser dann zu kompensieren ist.

In einer sehr vorteilhaften Ausführung wird der Bewertungsprozess, wie er oben dargelegt wurde, vollständig im Fahrzeug selbst durchgeführt. Damit ist eine schnelle Bewertung ermöglicht. Gerade dann, wenn das Fahrzeug bewegt wird und sowohl die Eigenlokalisierung auf Basis der digitalen Karte erfolgen soll, als auch die Beurteilung einer erfolgten oder potentiellen Aktualisierung der digitalen Karte erfolgen soll, ist dies ein vorteilhaftes Vorgehen.

In einem Ausführungsbeispiel wird vorgesehen, dass ein Bewertungsergebnis des Bewertungsprozesses, welches im Fahrzeug erzeugt wurde, an ein zum Fahrzeug externes Backend übertragen wird. Im Backend werden die Bewertungsergebnisse einer Fahrzeugflotte mit mehreren Fahrzeugen abgelegt. Im Backend wird das Bewertungsergebnis mit diesen Bewertungsergebnissen der Fahrzeugflotte verglichen. Abhängig von dem Vergleich wird ein End-Bewertungsergebnis, insbesondere durch das Backend, erzeugt. Dieses End-Bewertungsergebnis wird dem Fahrzeug bereitgestellt. Durch eine derartige Vorgehensweise können somit einfach und zuverlässig auch Informationen von anderen Fahrzeugen in die Bewertung einfließen, ob eine erfolgte oder potentielle Aktualisierung der digitalen Karte tauglich ist. Obwohl der Aufwand diesbezüglich höher sein kann, kann die Genauigkeit dieser Beurteilung erhöht werden.

In einem Ausführungsbeispiel wird bei einem Auftreten einer Positionsabweichung zwischen einer globalen Position und der berechneten globalen Position einer Landmarke diese Positionsabweichung als Fehlerterm gebildet. Dieser Fehlerterm wird insbesondere der vorzugsweise gebildeten Fehlerstatistik bereitgestellt. Insbesondere kann der Fehlerterm auch für das genannte Gütemaß berücksichtigt werden.

Vorzugsweise wird bei dem Auswerten der Fehlerstatistik ein gemittelter Fehler für das gesamte System vorgegeben. Fehlerterme, die die Positionsabweichung charakterisieren, werden insbesondere gemittelt. Dieser gemittelte Fehler wird mit dem gemittelten Fehlerterm verglichen. Abhängig von dem Vergleich wird beurteilt, ob zumindest eine der ausgewählten Landmarken, insbesondere eine dazu gebildete Aktualisierungs-Hypothese der digitalen Karte, insbesondere die gesamte digitale Karte, für eine Eigenlokalisierung des Fahrzeugs tauglich ist oder nicht. Die Bereitstellung einer derartigen Fehlerstatistik mit mehreren Fehlertermen ermöglicht eine noch genauere Aussage über die gemessenen und/oder berechneten Positionsabweichungen. Eine derartige Fehlerstatistik erlaubt es somit, genau zu analysieren, welche Abweichungen tatsächlich vorliegen. Damit kann genauer und detaillierter darauf geschlossen werden, ob Fehler der Erfassungseinheit und/oder andere Fehlereinflüsse vorliegen. Durch eine derartige detailliertere Analyse, welche Fehler vorliegen, kann auch die Beurteilung präzisiert werden, ob Landmarken zur Aufnahme oder Beibehaltung in einer digitalen Karte tauglich sind, insbesondere bezüglich der mit der digitalen Karte gewünschten und erforderlichen Eigenlokalisierung des Fahrzeugs.

Insbesondere wird anhand der Fehlerstatistik beurteilt, ob das System, insbesondere die zumindest eine Erfassungseinheit, so funktioniert, wie es angenommen wird beziehungsweise wie es beabsichtigt ist.

Es wird in einer vorteilhaften Ausführung durch die Fehlerstatistik und deren Auswertung eine Fehlerschätzung für das gesamte System durchgeführt.

In einer vorteilhaften Ausführung ist der gemittelte Fehler des gesamten Systems 0. Durch die oben genannten erzeugten Fehlerterme kann ein gesamter Ist-Fehlerterm bestimmt werden, der durch den gemittelten Fehlerterm definiert ist. Ist dieser gemittelte Fehlerterm ebenfalls 0 und entspricht somit dem gemittelten, vorgegebenen Fehler, so liegt ein funktionsfähiges, fehlerfreies System vor. Ist der gemittelte Fehlerterm abweichend von dem gemittelten Fehler, kann diese Abweichung wiederum beurteilt werden. Liegt sie innerhalb eines vorgebbaren Toleranzintervalls, kann die ausgewählte Landmarke und bezüglich der Positionsgenauigkeit beurteilte Landmarke beibehalten werden und somit auch die aktualisierte digitale Karte oder die dann damit zu aktualisierende digitale Karte insbesondere bei der Eigenlokalisierung des Fahrzeugs verwendet werden. Die insbesondere erzeugte Aktualisierungs-Hypothese wird dann bestätigt. Ist die Abweichung größer als ein vorgegebener Wert, so ist die ausgewählte und in ihrer Position beurteilte Landmarke nicht tauglich. Eine dazu insbesondre erzeugte Aktualisierungs-Hypothese wird dann verworfen.

In einem vorteilhaften Ausführungsbeispiel wird vor dem Bestimmen von potenziellen Positionsabweichungen von ausgewählten Landmarken und insbesondere daraus resultierenden Aktualisierungs-Hypothesen, ein Kartenabgleich zwischen der globalen Karte und der relativen Karte durchgeführt. Dies ist auch als Map-Matching zu bezeichnen. In einer vorteilhaften Ausführung wird auf Basis des Kartenabgleichs eine, insbesondere aktuelle, globale Position des Fahrzeugs bestimmt. Es wird also in vorteilhafter Weise erkannt, wo sich das Fahrzeug global befindet. Dies kann auch zumindest zeitweise parallel zu dem Bestimmen der Genauigkeit der globalen Position einer Landmarke, wie es oben erläutert wurde, erfolgen.

Vorzugsweise wird abhängig von diesem Kartenabgleich eine Zuordnung zwischen relativen Positionen von Landmarken und globalen Positionen von Landmarken durchgeführt. Insbesondere erfolgt eine diesbezügliche Zuordnung zwischen denjenigen relativen Landmarken, die mit der Erfassungseinheit erfasst wurden.

In einem Ausführungsbeispiel wird die Art einer Positionsabweichung einer ausgewählten Landmarke analysiert. Abhängig von der erkannten Art einer Positionsabweichung wird die Fehlerstatistik bestimmt beziehungsweise erstellt. Wie bereits oben erläutert, kann somit der Skalierungsgrad und somit die Analysetiefe bezüglich der Fehlererkennung und somit auch bezüglich der Beurteilung, ob eine ausgewählte und beurteile Landmarke tauglich ist oder nicht, erhöht werden. Insbesondere kann somit auch eine vorzugsweise erzeugte Aktualisierungs-Hypothese beurteilt werden.

Insbesondere werden bei dieser Analyse die Orientierung der Positionsabweichung und/oder der Abstand der Erfassungseinheit von der Landmarke berücksichtigt. So ist es beispielsweise möglich, dass dann, wenn die Erfassungseinheit, insbesondere die Kamera, in eine spezifische Orientierung gerichtet ist, beispielsweise zu weit links orientiert ist, erkannt werden kann, dass jegliche Messung diesbezüglich einen entsprechenden Versatz aufweist und somit diesbezüglich zu weit links gemessen werden würde. Diese Art der Positionsabweichung kann dann erkannt und analysiert und bei der Beurteilung berücksichtigt werden. Ebenso kann dies im Hinblick auf den bereits oben genannten Abstand erfolgen.

Ein weitere Aspekt der Erfindung betrifft ein Verfahren zur Eigenlokalisierung eines Fahrzeugs, bei welchem die globale Position des Fahrzeugs abhängig von zumindest einer Landmarke bestimmt wird, wobei die Tauglichkeit der Verwendung der Landmarke für die Eigenlokalisierung abhängig von einem Verfahren gemäß dem oben genannten Aspekt oder einem vorteilhaften Ausführungsbeispiel dazu bewertet wird.

Insbesondere dann, wenn eine ausgewählte Landmarke bezüglich ihrer globalen Position als tauglich beurteilt wird, wird die digitale Karte mit zumindest dieser Landmarke aktualisiert.

Es kann auch vorgesehen sein, dass dann, wenn eine Positionsabweichung für eine Landmarke bestimmt wurde und somit ein Fehlerterm für eine Abweichung einer errechneten globalen Position zu einer globalen Karte vorhandenen Position bestimmt wird, dieser Fehlerterm abgespeichert wird.

Grundsätzlich ist das vorgeschlagene Verfahren und somit der Bewertungsprozess auch dahingehend durchgeführt, dass während des Fortbewegens des Fahrzeugs insbesondere in zumindest diskreten Zeitabständen, insbesondere kontinuierlich, ein Erfassen der Umgebung mit der zumindest einen Erfassungseinheit des Fahrzeugs durchgeführt wird. Es werden somit zeitlich aufeinanderfolgend immer eine oder mehrere Landmarken erfasst. Gemäß den oben genannten Szenarien werden somit in bestimmten Zeitintervallen und somit zu spezifischen aufeinanderfolgenden Zeitpunkten immer wieder individuelle Aktualisierungs-Hypothesen erstellt. Es wird dann jeweils ein Beurteilen von zumindest einer oder mehrerer dieser Aktualisierungs-Hypothesen durchgeführt. Damit ist es auch ermöglicht, dass eine zeitlich nachfolgende Aktualisierungs-Hypothese unter Berücksichtigung von zeitlich vorher erstellten Aktualisierungs-Hypothesen beurteilt wird. Weist eine zeitlich vorhergehende Aktualisierungs-Hypothese eine spezifische Fehlerbeurteilung auf und somit einen individuellen Fehlerterm, so kann dieser Fehlerterm bei einer nachfolgend zu beurteilenden Aktualisierungs-Hypothese berücksichtigt werden.

Insbesondere ist es dadurch möglich, mehrere Fehlerterme zeitlich fortlaufend zu erstellen. Zumindest einige dieser Fehlerterme können dann bei der Erstellung der Fehlerstatistik berücksichtigt werden. Insbesondere kann dann bei diesem Auswerten der Fehlerstatistik ein mittlerer Fehlerterm bestimmt werden. Dieser kann dann, wie bereits oben dargelegt, mit einem insbesondere festgelegten, mittleren Fehler verglichen werden.

Insbesondere dann, wenn alle Fehlerterme den gleichen oder sehr ähnlichen Wert aufweisen, kann darauf geschlossen werden, dass die Erfassungseinheit des Fahrzeugs einen Fehler aufweist. Insbesondere kann die digitale Karte dann hergenommen werden. Es kann diesbezüglich eine Verwendung dahingehend erfolgen, dass der bekannte Fehler der Erfassungseinheit bei der Bestimmung der Eigenlokalisierung mittels der digitalen Karte berücksichtigt wird. Zusätzlich oder stattdessen kann vorgesehen sein, dass die digitale Karte nicht mit diesen Aktualisierungs-Hypothesen aktualisiert wird. Sie kann mit diesbezüglich korrigierten Aktualisierungs-Hypothesen aktualisiert werden. Wurde die digitale Karte bereits mit den fehlerhaften Aktualisierungs-Hypothesen aktualisiert, kann sie in einer vorteilhaften Ausführung diesbezüglich korrigiert werden.

Insbesondere dann, wenn das gesamte Bewertungsszenario und somit der vollständige Bewertungsprozess nur in dem Fahrzeug, welches die Erfassungseinheit aufweist, durchgeführt wird und somit kein Backend verwendet wird, kann in einer ersten Schicht der digitalen Karte ein Abspeichern der erzeugten Aktualisierungs-Hypothesen durchgeführt werden. Damit kann eine Schicht erzeugt werden, die mit einem gewissen Unsicherheitswert versehen ist, wobei sich dies auf den Aktualisierungsgrad beziehungsweise die Tauglichkeit der Verwendung der Aktualisierung bezieht. In einer ersten Schicht dieser digitalen Karte wird systematisch davon ausgegangen, dass diese Karte in Ordnung ist. Eine Eintragung einer neuen Landmarke in die oben genannte zweite Kartenschicht wird mit entsprechender Unsicherheit durchgeführt. Weist diese Landmarke und eine insbesondere erzeugte, zugehörige Aktualisierungs-Hypothese eine zu große Unsicherheit auf, wird sie verschoben und in der digitalen Karte nicht benutzt.

Insbesondere wird bei der Erstellung der Fehlerstatistik auch ein Vergleich der Fehlerterme durchgeführt. Weisen diese Fehlerterme alle oder im Wesentlichen alle den gleichen Fehler auf, kann auf einen systematischen Fehler der Erfassungseinheit geschlossen werden. Insbesondere dann, wenn unterschiedliche Fehler auftreten und diese unterschiedlichen Fehler der Fehlerterme gleich dem gemittelten, vorgegebenen Fehler sind, ist das System tauglich und die digitale Karte im aktualisieren Zustand oder im noch zu aktualisierenden Zustand für die Eigenlokalisierungsbestimmung des Fahrzeugs verwendbar.

Ein weiterer Aspekt der Erfindung betrifft ein Verfahren zur Eigenlokalisierung eines Fahrzeugs. Die globale Position des Fahrzeugs wird abhängig von einer digitalen Karte bestimmt. Die Verwendung der digitalen Karte für diese Eigenlokalisierungsbestimmung wird abhängig von einem Verfahren gemäß dem oben genannten Aspekt oder einer vorteilhaften Ausgestaltung davon bewertet.

Ein weiterer Aspekt der Erfindung betrifft ein elektronisches Bewertungssystem zum Bewerten einer digitalen Karte, insbesondere bezüglich ihrer Verwendung für eine Eigenlokalisierung eines Fahrzeugs. Das Bewertungssystem weist zumindest eine Erfassungseinheit des Fahrzeugs auf. Das Bewertungssystem weist darüber hinaus zumindest eine Auswerteeinheit auf. Das Bewertungssystem ist zum Durchführen eines Verfahrens gemäß dem oben genannten Aspekt oder einer vorteilhaften Ausführung davon ausgebildet. Insbesondere wird das Verfahren mit dem Bewertungssystem durchgeführt.

Insbesondere ist das Bewertungssystem auch zum Bewerten von Aktualisierungs-Hypothesen für eine digitale Karte ausgebildet. Es wird insbesondere auch ein Verfahren zum Bewerten von zumindest einer Aktualisierungs-Hypothese für eine digitale Karte bereitgestellt.

Auch bei dem Ausführungsbeispiel, bei welchem die Aktualisierungsdaten und somit die Aktualisierungs-Hypothesen vom Fahrzeug an ein Backend übertragen werden, werden diese Aktualisierungs-Hypothesen auch fahrzeugintern bewertet.

Der allgemeine Vorteil der Durchführung des Bewertungsprozesses durch das Fahrzeug liegt auch darin, dass das Backend diese Bewertungsergebnisse beim Abgleich mit Flottendaten berücksichtigen oder schon direkt verwerfen kann, falls diese Aktualisierungsdaten und somit diese Aktualisierungs-Hypothesen außerhalb der Fehlertoleranzen liegen.

Der Begriff der Hypothese beschreibt im Kontext der Anmeldung eine möglicherweise notwendige Aktualisierung der digitalen Karte. Diese kann beispielsweise das Verändern der Position einer Landmarke, das Hinzufügen einer bisher unbekannten Landmarke sowie das Löschen einer nicht mehr vorhandenen Landmarke sein. Mit dem vorgeschlagenen Verfahren ist es nunmehr möglich, dass eine Landmarke einerseits bereits bestmöglich bestimmt wird und nunmehr zusätzlich weiter überprüft wird, ob sie auch genau genug bestimmt wird. Bei bisherigen Verfahren kann zwar eine Position der Landmarke bestimmt werden, da jedoch keine weitere Überprüfung durchgeführt wird, kann nicht darauf geschlossen werden, ob systematische Messfehler dieses Ergebnis verfälscht haben. Genau dies wird durch die Erfindung nun ermöglicht. Durch das vorgeschlagene Verfahren, bei welchem insbesondere mittels der Fehlerstatistik auch ein Rückschluss auf die Funktionsweise des Systems erfolgen kann, da diese Abweichungen nochmals detaillierter beurteilt werden, kann die Tauglichkeitsanalyse einer digitalen Karte verbessert werden, da ein mehrstufiger Prozess durchgeführt wird. Insbesondere ist es vorteilhaft, dass für diese Erstellung der Fehlerstatistik nicht nur eine Positionsabweichung zumindest einer ausgewählten Landmarke, insbesondere auch eine zugehörig erzeugte Aktualisierungs-Hypothese, sondern mehrere Positionsabweichungen ausgewählter Landmarken, insbesondere auch zugehörig erzeugter Aktualisierungs-Hypothesen, berücksichtigt werden. Da sich daraus mehrere Fehlerterme ergeben, kann die Fehlerstatistik mit einem genaueren Aussagegehalt bereitgestellt werden. Insbesondere werden zumindest zwei, insbesondere zumindest fünf, insbesondere zumindest zehn, derartige Fehlerterme berücksichtigt.

Bei dem oben geschilderten Verfahren ist vorzugsweise auch vorgesehen, dass dann, wenn bei der Auswertung der Fehlerstatistik ermittelt wird, dass das System und somit die mehreren Positionsabweichungen der ausgewählten Landmarken, und insbesondere zugehörig erzeugter Aktualisierungs-Hypothesen, im Durchschnitt eine Abweichung von einem Wert x haben und somit ein gemittelter Fehlerterm x für die Positionen von Landmarken besteht, eine neu detektierte weitere Landmarke und zunächst eine bestmögliche Position dieser neuen Landmarke aufgrund der aktuellen Messdaten und somit der bisherigen Fehlerterme bestimmt wird. Tritt dabei ein Fehlerterm auf, der größer als x ist, so wird die Positionsabweichung der Landmarke, insbesondere auch der vorzugsweise zugehörig erzeugten Aktualisierungs-Hypothese, verworfen. Trotz dem, dass die Position dieser neuen Landmarke bestmöglich geschätzt wurde, liegt dann mit entsprechender Wahrscheinlichkeit eine fehlerhafte Kalibrierung der Erfassungseinheit oder ein anderer Fehler vor. Ist andererseits der Fehlerterm dieser neuen erfassten Landmarke kleiner als x, so wird die Landmarke, insbesondere auch die vorzugsweise zugehörig erzeugte Aktualisierungs-Hypothese zu dieser neuen Landmarke, angenommen. Beim nächsten Vorbeifahren des Fahrzeugs an dieser erfassten neuen Landmarke wird diese als globale Landmarke dann betrachtet und mit einem Fehlerterm von x genutzt.

Allgemein wird somit einer erfassten und ausgewählten Landmarke bei einem Auftreten einer Positionsabweichung, insbesondere auch einer vorzugsweise zugehörig erzeugten Aktualisierungs-Hypothese ein individueller Fehlerterm zugeschrieben beziehungsweise diese damit charakterisiert. Insbesondere wird der gemittelte Fehler vorgegeben. Dieser gemittelte Fehler x kann individuell vorgegeben werden. Er kann auch individuell verändert werden. Beispielsweise kann auch eine dynamische Änderung vorgesehen sein.

Dieser gemittelte Fehler kann abhängig vom Fahrzeug und/oder der Erfassungseinheit sein. Er kann zusätzlich oder stattdessen auch abhängig von dem Verkehrsweg, auf welchem sich das Fahrzeug befindet, sein. Beispielsweise kann der gemittelte Fehler in dem Zusammenhang auf Autobahnen anders sein als auf Landstraßen oder kleinen anderweitigen Verkehrswegen.

Grundsätzlich kann eine Landmarke ein spezifisches Objekt in der Umgebung des Fahrzeugs sein. Es können ortsfeste Objekte sein. Beispielsweise kann dies ein Verkehrsleitelement, wie beispielsweise eine Ampel, ein Verkehrszeichen oder dergleichen sein. Eine Landmarke kann jedoch auch beispielsweise ein spezifisches Gebäude oder ein spezifischer Baum sein. Landmarken können auch nicht-ortsfeste Objekte sein. Beispielsweise kann dies ein bewegbares Verkehrszeichen oder dergleichen sein.

Vorzugsweise werden Landmarken in zumindest zwei verschiedene Klassen eingeteilt. Diese Klassen können vorgegeben sein. Beispielsweise kann eine Klasse eine Spezifikation einer Landmarke in der Umgebung sein. Zusätzlich oder stattdessen kann eine Klassifikation auch abhängig von der Tageszeit sein. Beispielsweise kann hier eine Unterscheidung zwischen Nacht und Tag erfolgen. Beispielsweise kann diese Klassifikation beinhalten, dass eine Schätzung einer Landmarke und somit eine Positionsbeurteilung bei Tageslicht der Erfassungseinheit besser möglich ist, als in der Nacht. Damit können Fehlerterme auch abhängig von der Klassifizierung einer Landmarke gewichtet werden. Dies ist ein weiterer Vorteil, um die Genauigkeit der Analyse und somit des Bewertungsprozesses zu verbessern.

Insbesondere kann auch vorgesehen sein, dass anhand des Bewertungsprozesses ein Gütemaß für das System bestimmt wird. Somit wird für die mehreren Positionsabweichungen von ausgewählten Landmarken, insbesondere zusätzlich vorzugsweise erzeugten Aktualisierungs-Hypothesen, ein derartiges Gütemaß bestimmt. Dieses Gütemaß kann in einer vorteilhaften Ausführung auch der digitalen Karte zugeordnet werden. Ebenso kann in dem Zusammenhang ein Gütemaß der oben genannten Klassifikation durchgeführt werden. Somit kann auch dieser jeweiligen Klasseneinteilung ein Gütemaß zugeordnet werden.

Bei dem Erfassen einer Landmarke mit der Erfassungseinheit kann diese Landmarke beim Vorbeifahren des Fahrzeugs auch mehrfach detektiert werden und dies beispielsweise auch aus verschiedenen Perspektiven erfolgen. Insbesondere werden diese erfassten Landmarken in einem Fahrzeug-Koordinatensystem eingetragen, sodass sich die oben genannten relativen Positionen ergeben. Diese erfassten Landmarken werden vorzugsweise mithilfe eines Schätzverfahrens, beispielsweise eines Graphen-basierten Optimierungssystems aus dem vorzugsweise SLAM-Algorithmus, miteinander verrechnet.

Es können einzelne Messungen einer Landmarke und somit einzelne Erfassungen dieser Landmarke beispielsweise abhängig von der Perspektive und/oder der Distanz beziehungsweise dem Abstand der Erfassungseinheit unterschiedlich gewichtet werden. Es können in dem Zusammenhang auch die Odometrie oder eine GNSS-Information und/oder andere Sensorinformationen einbezogen werden, um die Position des Fahrzeugs zu bestimmen. Insbesondere wird hier die globale Position des Fahrzeugs bestimmt.

Durch das Verfahren wird erreicht, dass eine fehlerhafte globale Position einer Landmarke, die insbesondere in der digitalen Karte eingetragen wird, nicht dazu führen kann, dass bei der nächsten Vorbeifahrt des Fahrzeugs an dieser Landmarke die Relativ-Messung mit der Erfassungseinheit nicht mehr zu dem passt, was aus der globalen Karte erwartet wird. Dies kann dazu führen, dass die globale Position des Fahrzeugs falsch geschätzt wird und somit die Eigenlokalisation falsch geschätzt wird. Wenn diese Eigenlokalisierung des Fahrzeugs falsch geschätzt wird, werden dann wiederum alle neuen Landmarken ebenfalls global falsch positioniert. Dadurch beginnt ein Kreislauf, der durch das vorgeschlagene Verfahren oder eine vorteilhafte Ausgestaltung davon eben genau unterbrochen wird. Dies erfolgt dahingehend, dass das System, insbesondere ständig, eine Eigendiagnose durchführt. Das System bewertet also seine eigenen bestimmten Positionsabweichungen der ausgewählten Landmarke nochmals intern. Es wird also ein zumindest zweistufiger Überprüfungsprozess durchgeführt. Bestimmte Positionsabweichungen, insbesondere auch vorzugsweise zugehörig erzeugte Aktualisierungs-Hypothesen, werden nicht als zutreffend hingenommen, sondern nochmals intern durch ein spezifisches Verfahren, wie es erläutert wurde, bewertet. Dies verhindert letztlich, dass falsche globale Positionen von Landmarken in die digitale Karte eingetragen werden oder dauerhaft darin stehenbleiben und ohne die Kenntnis der Fehlerhaftigkeit genutzt werden.

Es wird insbesondere ermöglicht, dass bei einem Ausführungsbeispiel mithilfe der in der digitalen Karte eingetragenen Landmarken während der Fahrt des Fahrzeugs kontinuierlich oder zyklisch nach festgelegten Zeitintervallen oder Wertintervallen geschätzt wird, mit welcher Genauigkeit die Positionsbestimmung einer Landmarke aktuell erfolgt. Es wird insbesondere dabei ermittelt, inwieweit die geschätzte Position einer Landmarke von ihrer in der Karte eingetragenen globalen Position abweicht. Vorzugsweise werden die hier verwendeten Landmarken aus der digitalen Karte so ausgewählt, dass sie gut detektierbar sind und dass ihre Position mit einer hohen Genauigkeit bekannt ist. Wird eine neue, nicht in der digitalen Karte enthaltene Landmarke erfasst, so kann für die Schätzung der Genauigkeit ihrer Position die Genauigkeit von Vergleichslandmarken in ihrer Umgebung dienen, wie dies bereits oben erläutert wurde. Diese Information kann für die Generierung von vorzugsweise auch erzeugten Aktualisierungs-Hypothesen für Landmarken genutzt werden.

Die Gründe für Fehler bei der Bestimmung der Position einer Landmarke können beispielsweise eine fehlerhafte Sensorkalibrierung, ein Sensorausfall, ein fehlerhaftes Durchführen eines Kartenabgleichs und generelle Systemfehler sein. Der Sensor ist hierbei die Erfassungseinheit des Fahrzeugs.

Vorrangig ist es hierbei nicht zu versuchen, einen Rückschluss auf die jeweilige konkrete Ursache des Fehlers herzustellen, da die Fehlerbilder typischerweise von der verwendeten Sensorik beziehungsweise der Erfassungseinheit abhängen. Stattdessen behandelt die Erfindung vorrangig ein System, welches unabhängig von der verwendeten Erfassungseinheit in der Lage ist, Fehler bei der Generierung von Positionsabweichungen von ausgewählten Landmarken zu schätzen. Anschließend kann eine detaillierte Diagnose durchgeführt werden.

Durch eine derartige Vorgehensweise ist es daher ermöglicht, dass die digitale Karte genauer bewertet wird. Es werden somit insbesondere nicht mehr automatisch Aktualisierungen der digitalen Karte vorgenommen und diese ohne weitere Überprüfung beibehalten. Vielmehr wird mit dem vorgeschlagenen Verfahren eine potentielle Aktualisierung der digitalen Karte nochmals überprüft. Es kann also vorgesehen sein, dass eine potentielle Aktualisierung der digitalen Karte bereits vorgenommen wurde und die dann aktualisierte digitale Karte durch das vorgeschlagene Verfahren nochmals überprüft wird. Insbesondere erfolgt dies anhand der nochmaligen Überprüfung der Positionsabweichungen der zumindest einen ausgewählten Landmarke. Insbesondere ist dabei das Bestimmen der Fehlerstatistik, das Auswerten der Fehlerstatistik und das Beurteilen, ob zumindest eine ausgewählte Landmarke der digitalen Karte für die Eigenlokalisierung des Fahrzeugs tauglich ist, wobei dies insbesondere abhängig von der Auswertung der Fehlerstatistik beurteilt wird, wesentlich. Es kann also praktisch in einem Ausführungsbeispiel die digitale Karte durch die eine oder mehrere Positionsabweichungen bereits aktualisiert werden, um dann diese aktualisierte digitale Karte durch diese oben genannten Vorgänge mit der Fehlerstatistik und deren Auswertung nochmals zu überprüfen. Es kann jedoch auch vorgesehen sein, dass diese Positionsabweichungen noch nicht in eine Aktualisierung der digitalen Karte übergeführt wurden und somit diese Positionsabweichungen in diesem Ausführungsbeispiel vor dem Aktualisieren der digitalen Karte mit diesen Positionsabweichungen nochmals überprüft werden.

Zentral ist es daher insbesondere, dass bestimmte Positionsabweichungen von ausgewählten Landmarken, insbesondere auch vorzugsweise zusätzlich zugehörig erzeugte Aktualisierungs-Hypothesen, die zunächst das Erfordernis einer Aktualisierung der digitalen Karte bedeuten, durch ein ganz spezifisches Szenario vorzugsweise mit der Fehlerstatistik, deren Auswertung und den dann noch folgenden Schritten zusätzlich nochmals überprüft werden.

Insbesondere erfolgt somit in besonders vorteilhafter Weise das automatisierte Überprüfen beziehungsweise Bewerten der vom Fahrzeug selbst erzeugten Positionsabweichungen. Insbesondere erfolgt dieses automatisierte Überprüfen wiederum durch das Fahrzeug selbst. Dieses Überprüfen der Positionsabweichungen erfolgt hinsichtlich Abweichungen insbesondere bezüglich der spezifizierten Fehlertoleranz.

Durch eine derartige Vorgehensweise des vorgeschlagenen Verfahrens lassen sich einerseits digitale Karten genauer erzeugen und potentielle Aktualisierungen dahingehend bewerten und abschätzen, ob sie auch tatsächlich für eine weitere Verwendung taugen. Damit ist es ermöglicht, dass Fehlereinflüsse wie Messtoleranzen und/oder Fehler der Erfassungseinheit und dergleichen verbessert erkannt werden können. Damit können derartige Fehlereinflüsse auch verbessert eliminiert bzw. berücksichtigt werden.

Ein Aspekt der Erfindung betrifft ein Verfahren zum Bewerten einer digitalen Karte, bei welchem die Genauigkeit der Position zumindest einer ausgewählten Landmarke gemäß dem oben genannten Verfahren oder einem vorteilhaften Ausführungsbeispiel dazu bestimmt wird. Abhängig von der Bestimmung wird geprüft, ob eine Aktualisierung der digitalen karte erfolgt und/oder ob die digitale Karte für eine Eigenlokalisierung des Fahrzeugs tauglich ist.

Die Erfindung umfasst auch die Kombinationen der Merkmale der beschriebenen Ausführungsbeispiele.

Im Folgenden werden Ausführungsbeispiele der Erfindung beschrieben. Hierzu zeigt:
- Fig. 1: eine vereinfachte Darstellung einer Verkehrsszenerie mit einem Fahrzeug und Landmarken; und
- Fig. 2: eine schematische Darstellung von Ablaufdiagrammen von Verfahren gemäß Ausführungsbeispielen der Erfindung.

Bei dem in Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

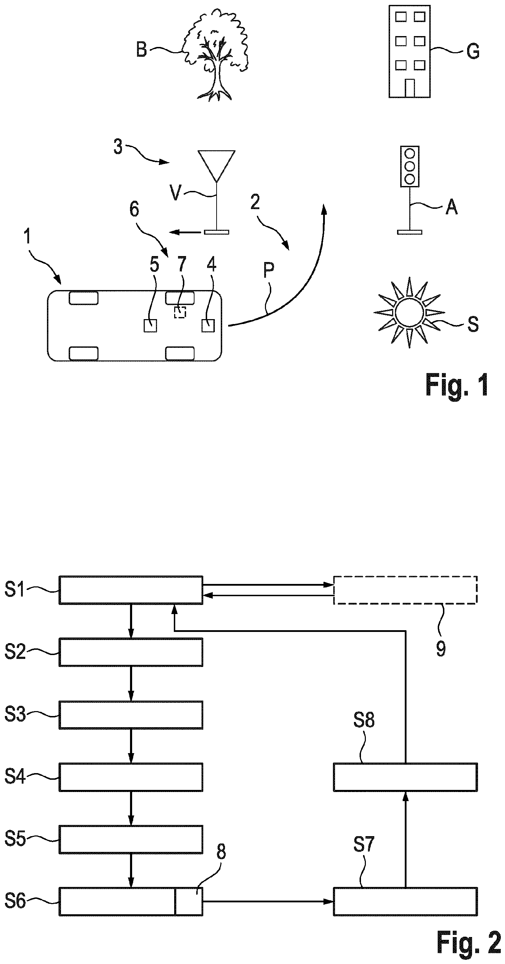

In Fig. 1 ist in einer schematischen vereinfachten Darstellung ein Fahrzeug 1 gezeigt. Das Fahrzeug 1 kann ein Kraftfahrzeug, wie beispielsweise ein Personenkraftwagen oder ein Lastkraftwagen, sein. Das Fahrzeug 1 fährt in Richtung eines Pfeils P einen Verkehrsweg 2. Der Verkehrsweg 2 kann beispielsweise eine öffentliche Straße wie beispielsweise eine Staatsstraße oder eine Bundesstraße oder eine Autobahn sein. Der Verkehrsweg 2 kann Überland oder in einer Ortschaft sein. Die Beispiele für einen Verkehrsweg 2 und dessen Verlauf sind keinesfalls abschließend zu verstehen, sondern lediglich beispielhaft zu verstehen. In der Umgebung 3 des Fahrzeugs 1 sind mehrere Objekte angeordnet. Diese sind insbesondere Landmarken. Beispielsweise ist dies eine Straßenlaterne S, eine Ampel A, ein Gebäude G, ein Baum B und ein Verkehrsschild V. Beispielsweise kann das Verkehrsschild V ein mobiles beziehungsweise bewegbares Verkehrsschild sein. Insbesondere sind die anderen hier genannten Landmarken ortsfest in der Umgebung 3 angeordnet. Sowohl die Art als auch die Anzahl als auch die Position der beispielhaften genannten Landmarken sind nicht abschließend zu verstehen. Auch deren Ortsfestheit oder deren Mobilität ist lediglich beispielhaft zu verstehen.

Das Fahrzeug 1 weist zumindest eine Erfassungseinheit 4 auf. Dies kann beispielsweise eine Kamera sein. Die Erfassungseinheit 4 ist so angeordnet, dass sie die Umgebung 3 des Fahrzeugs 1 erfassen kann. Darüber hinaus ist vorgesehen, dass das Fahrzeug 1 eine Auswerteeinheit 5 aufweist. Im gezeigten Ausführungsbeispiel sind die Erfassungseinheit 4 und die Auswerteeinheit 5 Bestandteil eines Bewertungssystems 6. Das elektronische Bewertungssystem 6 ist auch zum Bewerten einer digitalen Karte 7 ausgebildet. Die digitale Karte 7 ist in Fig. 1 beispielhaft im Fahrzeug 1 abgelegt gezeigt. Sie kann jedoch auch extern zum Fahrzeug 1 abgelegt sein. Sie kann dann entsprechend für das Fahrzeug 1 zur Verfügung gestellt sein. Das Bewertungssystem 6 ist auch zum Bewerten der digitalen Karte 7 insbesondere bezüglich ihrer Verwendung für eine Eigenlokalisierung des Fahrzeugs 1 ausgebildet. Insbesondere ist das Bewertungssystem 6 zumindest zum Bewerten von Positionsabweichungen von ausgewählten Landmarken für diese digitale Karte 7, insbesondere bezüglich der Verwendung dieser ausgewählten Landmarken, für eine Eigenlokalisierung des Fahrzeugs 1 ausgebildet. Insbesondere wird dieses jeweilige entsprechende Verfahren mit diesem Bewertungssystem 6 durchgeführt.

In Fig. 2 ist in einer schematischen Darstellung ein Ablaufdiagramm für ein Ausführungsbeispiel eines Verfahrens gezeigt. Es wird zunächst mit der zumindest einen Erfassungseinheit 4 während der Fortbewegungsfahrt des Fahrzeugs 1 die Umgebung 3 des Fahrzeugs 1 erfasst. Dabei werden zumindest einige Landmarken S, A, G, B und V mit der Erfassungseinheit 4 gleichzeitig oder in spezifischen Zeitpunkten nacheinander erfasst. Es wird eine relative Karte der Umgebung 3 auf Basis der erfassten Informationen erstellt. Insbesondere läuft in dem Zusammenhang gemäß einem Schritt S1 vorzugsweise ein Graphen-basiertes Lokalisierungs- und Kartierungssystem. In dieser relativen Karte werden relative Positionen von erfassten Landmarken S, A, G, B, V eingetragen.

Es wird dann ein Bereitstellen einer globalen digitalen Karte 7 der Umgebung 3 mit globalen Positionen von Landmarken durchgeführt. Die globalen Positionen können die Positionen der Landmarken S, A, G, B, V sein.

Es kann in dem Zusammenhang der Fall sein, dass zumindest eine der Landmarken bisher nicht vorhanden war und somit eine neue Landmarke darstellt. Beispielsweise kann dies das Verkehrsschild V sein, welches erst neu aufgestellt wurde. Ebenso ist es in einem weiteren Ausführungsbeispiel möglich, dass alle erfassten Landmarken auch vorher schon da waren, also insbesondere auch bei der letzten Vorbeifahrt des Fahrzeugs 1, und keine neuen Landmarken sind. Diese weisen dann allesamt globale Positionen auf, die in der globalen digitalen Karte 7 vorhanden sind. Auch kann in einem weiteren Ausführungsbeispiel vorgesehen sein, dass alle erfassten Landmarken bereits vorher vorhanden waren, jedoch beispielsweise eine der Landmarken zwischenzeitlich ihre Position geändert hat. Beispielsweise kann dies bei einem Verkehrsschild V der Fall sein, welches mobil ist und somit seine Position ändern kann.

In einem weiteren Schritt S2 erfolgt dann ein Auswählen zumindest einer erfassten Landmarke A, B, G, S, V, die auch in der globalen Karte 7 vorhanden ist. Dies erfolgt insbesondere durch das elektronisches Bewertungssystem 6. Die Auswahl kann nach einem Zufallsprinzip erfolgen. Die globale Position dieser zufällig ausgewählten Landmarke A, B, G, S, V wird dann bewertet.

In einem vorteilhaften Ausführungsbeispiel wird gemäß einem Schritt S3 diese als Prüf-Landmarke bezeichnete Landmarke A, B, G, S, V temporär aus der digitalen Karte 7 entfernt. Die zugehörige globale Position dieser Prüf-Landmarke wird vorzugsweise als Referenzposition gespeichert. Dies erfolgt insbesondere durch das elektronische Bewertungssystem 6.

In einem weiteren Schritt S4 erfolgt ein Berechnen der globalen Position dieser ausgewählten Landmarke A, B, G, S, V. Die globale Position dieser Landmarke aus der digitalen globalen Karte 7 wird bei dieser separaten Berechnung nicht berücksichtigt. Sie geht also in die Berechnung nicht mit ein. Diese Berechnung der globalen Position erfolgt insbesondere abhängig von Positionen anderer Landmarken, die bei dem Erfassungsvorgang erfasst wurden und/oder abhängig von Landmarken, die bei einem anderen, insbesondere vorhergehenden, Erfassungsvorgang mit der zumindest einen Erfassungseinheit 4 erfasst wurden. Insbesondere erfolgt die Berechnung durch das elektronische Bewertungssystem 6.

Es wird dann ein Vergleichen der globalen Position der zumindest einen ausgewählten Landmarke A, B, G, S, V in der globalen Karte 7 mit der berechneten globalen Position dieser Landmarke A, B, G, S, V durchgeführt. Dies erfolgt insbesondere mit dem elektronischen Bewertungssystem 6.

Es wird gemäß einem Schritt S5 ein Bestimmen einer Positionsabweichung zwischen der globalen Position dieser zumindest einen ausgewählten Landmarke A, B, G, S, V und der berechneten globalen Position dieser Landmarke A, B, G, S, V durchgeführt. Dies erfolgt insbesondere durch das elektronische Bewertungssystem 6.

In dem Schritt S5 im gezeigten Ausführungsbeispiel kann die Positionsabweichung als ein Fehlerterm zwischen der geschätzten beziehungsweise berechneten globalen Position dieser temporär entfernten Landmarke A, B, G, S, V und der abgespeicherten Referenzposition, die auch eine globale Position ist, dieser spezifischen Landmarke A, B, G, S, V bestimmt werden. Dieser Fehlerterm kann insbesondere dann erzeugt werden, wenn die Positionsabweichung größer einem Schwellwert ist. Dieser Fehlerterm wird insbesondere einer Fehlerstatistik bereitgestellt. Insbesondere erfolgt dies für mehrere Landmarken.

Insbesondere wird eine Positionsabweichung, insbesondere ein Fehlerterm, gemäß einem Schritt S6 abgespeichert. Insbesondere erfolgt dies in einer Datenbank 8. Die Datenbank 8 kann im Fahrzeug 1 sein. Es kann vorgesehen sein, dass nur Positionsabweichungen berücksichtigt werden, die eine Abweichung größer einem Schwellwert aufweisen. Der Schwellwert kann größer oder gleich 5 cm, insbesondere größer oder gleich 10 cm sein.

Die Positionsabweichung wird für die Beurteilung der Genauigkeit der Positionsbestimmung der Landmarke A, B, G, S, V berücksichtigt. Dies erfolgt insbesondere durch das elektronische Beurteilungssystem 6.

In einem Ausführungsbeispiel wird in einem weiteren Schritt nach dem Bestimmen einer Positionsabweichung ein Erzeugen von zumindest einer Aktualisierungs-Hypothese für die digitale Karte 7 auf Basis zumindest einer Positionsinformation zumindest einer Landmarke durchgeführt. Insbesondere kann dies abhängig von der bestimmten Positionsabweichung der globalen Position der ausgewählten Landmarke A, B, G, S, V von der berechneten globalen Position dieser ausgewählten Landmarke A, B, G, S, V erfolgen.

Insbesondere kann eine Aktualisierungs-Hypothese auch von Positionsinformationen von Landmarken in der relativen Karte und/oder auf Basis von Positionsinformationen von Landmarken in der globalen Karte durchgeführt werden. Insbesondere auch hier, wenn eine Positionsabweichung für eine Landmarke zu einer globalen Position zumindest eines Referenzobjekts auftritt. Das genannte Referenzobjekt kann beispielsweise eine Landmarke oder das Fahrzeug 1 sein.

Es wird in einem Ausführungsbeispiel bei dem Algorithmus nach Positionsabweichungen der globalen Position von erfassten und/oder neu hinzugekommenen Landmarken und/oder örtlich sich verändernden Landmarken gesucht beziehungsweise diese Positionsabweichungen werden bestimmt. Insbesondere dann, wenn eine derartige Positionsabweichung für eine erfasste Landmarke aufgetreten ist, wird zunächst diesbezüglich vorzugsweise eine Aktualisierungs-Hypothese angenommen. Dies bedeutet beispielsweise, dass auf Basis dieser Beurteilung das Bewertungssystem 6 zu dem vorläufigen Ergebnis gekommen ist, dass die digitale Karte 7 auf Basis der Positionsabweichung aktualisiert werden sollte.

Dieses vorläufige Ergebnis wird bei dem vorgeschlagenen Verfahren dann nochmals zusätzlich überprüft.

Bei dem Verfahren wird dazu dann in einem Ausführungsbeispiel auf Basis der bestimmten Positionsabweichungen der vorzugsweise mehreren ausgewählten Landmarke, insbesondere auch der vorzugsweise auch erzeugten und angenommenen Aktualisierungs-Hypothesen, eine Fehlerstatistik bestimmt. Dadurch wird auch hier die Genauigkeit der Positionsbestimmung überprüft.

Dabei werden vorzugsweise mehrere aufgetretene und gemäß dem oben erläuterten Szenario bestimmte Positionsabweichungen von ausgewählten Landmarken, insbesondere auch dazu vorzugsweise zusätzlich erzeugter, zugehöriger Aktualisierungs-Hypothesen, berücksichtigt, die somit in die Fehlerstatistik einfließen. Diese Fehlerstatistik wird in einem weiteren Schritt S7 ausgewertet.

In einem Ausführungsbeispiel wird abhängig von der Auswertung der Fehlerstatistik beurteilt, ob zumindest eine ausgewählte Landmarke, insbesondere auch eine dazu vorzugsweise zusätzlich erzeugte Aktualisierungs-Hypothese der digitalen Karte 7, insbesondere die gesamte digitale Karte 7, für eine Eigenlokalisierung des Fahrzeugs 1 tauglich ist oder nicht. Dies beinhaltet auch, dass gegebenenfalls ein Tauglichkeitsgrad beurteilt wird. Es kann somit nicht nur digital zwischen einer vollständigen Tauglichkeit oder einer vollständigen Nichttauglichkeit unterschieden werden. Vielmehr kann in einer vorteilhaften Ausführung auch ein gewisser Grad der Tauglichkeit bestimmt werden. Dieser kann somit auch ein Prozentwert zwischen 0 Prozent und 100 Prozent sein.

Vorzugsweise werden bei dem Schritt S7 die vorzugsweise erzeugten Fehlerterme, die die Fehlerstatistik bilden, ausgewertet. Insbesondere wird dabei aufgrund aller bisher geschätzten beziehungsweise berechneten Fehlerterme eine statistische Auswertung durchgeführt.

Dabei wird in einer vorteilhaften Ausführung gemäß einem Schritt S8 ein vorgegebener, gemittelter Fehler für das gesamte System mit einem gemittelten Fehlerterm verglichen. Diese Fehlerterme, die der Fehlerstatistik zugrundegelegt werden, charakterisieren Positionsabweichungen. Diese Fehlerterme werden gemittelt, beispielsweise arithmetisch, wodurch sich der gemittelte Fehlerterm ergibt. Abhängig von dem Vergleich zwischen dem gemittelten Fehler des gesamten Systems mit dem bestimmten gemittelten Fehlerterm wird beurteilt, ob die zumindest eine ausgewählte Landmarke A, B, G, S, V, insbesondere auch eine vorzugsweise zusätzlich erzeugte und zugehörige Aktualisierungs-Hypothese, der digitalen Karte 7, insbesondere die gesamte digitale Karte 7, für eine Eigenlokalisierung des Fahrzeugs 1 tauglich ist oder nicht und/oder mit welchem Grad sie tauglich ist. Ist der gemittelte Fehlerterm größer als der gemittelte Fehler, so wird in einem Szenario die ausgewählte Landmarke A, B, G, S, V, insbesondere eine dazu erzeugte Aktualisierungs-Hypothese, als nicht tauglich für die digitale Karte und somit als nicht tauglich für die Eigenlokalisierung des Fahrzeugs 1 auf Basis der digitalen Karte bewertet. Ist der gemittelte Fehlerterm kleiner oder gleich diesem gemittelten Fehler, so kann die grundsätzliche Tauglichkeit dieser ausgewählten Landmarke A, B, G, S, V, insbesondere auch die vorzugsweise dazu erzeugte Aktualisierungs-Hypothese, bewertet werden. Dieser gesamte Bewertungsprozess wird vorzugsweise vollständig im Fahrzeug 1 selbst durchgeführt.

In einer Alternative kann vorgesehen sein, dass nach dem Schritt S8 das Bewertungsergebnis zu einer ausgewählten Landmarke A, B, G, V, S, insbesondere auch einer dazu vorzugsweise zusätzlich erzeugten Aktualisierungs-Hypothese, einem fahrzeugexternen Backend 9 übermittelt wird. In diesem Backend 9 wird dieses Bewertungsergebnis berücksichtigt. Zusätzlich werden darüber hinaus auch noch Bewertungsergebnisse von zumindest einem weiteren Fahrzeug einer Fahrzeugflotte berücksichtigt. Es wird dann ein End-Bewertungsergebnis bestimmt.

Zu Fig. 2 wurde beispielhaft das Szenario erläutert, bei welchem eine zufällig ausgewählte Prüf-Landmarke bereits vorher vorhanden war und in der digitalen Karte mit einer globalen Position vorhanden ist.

Möglich ist es in einem weiteren Szenario auch, dass eine zufällig ausgewählte Landmarke neu ist und vorher nicht vorhanden war. Dies bedeutet, dass sie noch keine globale Position in der globalen digitalen Karte aufweist. In einem derartigen Szenario kann vorgesehen sein, dass andere erfasste Landmarken mit ihren relativen Positionen berücksichtigt werden, um eine globale Position des Fahrzeugs 1 zu berechnen. Die globale Position dieser neuen Landmarke wird dann abhängig von der berechneten, globalen Position des Fahrzeugs 1 bestimmt.

Insbesondere wird bei allen möglichen Szenarien die vorzugsweise erzeugte Fehlerstatistik dahingehend ausgewertet, ob die Positionsabweichungen auf einem Fehler der Erfassungseinheit 4 beruhen. Die Verwendung zumindest der ausgewählten und bezüglich der Genauigkeit der Position bestimmten Landmarke A, B, G, S, V, insbesondere auch der dazu vorzugsweise zusätzlich erzeugten und zugehörigen Aktualisierungs-Hypothesen, insbesondere die Verwendung der digitalen Karte 7, für die Eigenlokalisierung des Fahrzeugs 1 wird beispielsweise bejaht, wenn diese Positionsabweichungen auf einem Fehler der Erfassungseinheit 4 beruhen. Dies wird insbesondere dadurch erkannt, dass alle Fehlerterme einen gleichen Fehler aufweisen. Es ist dann erkennbar, dass der Fehler bei der Erfassungseinheit 4 liegt. Der bekannte Fehler wird dann jeweils bei der Eigenlokalisierung berücksichtigt.

Vorzugsweise wird vor dem Erzeugen von Positionsabweichungen von ausgewählten Landmarken, insbesondere auch dazu erzeugter Aktualisierungs-Hypothesen, ein Kartenabgleich zwischen der globalen Karte und der relativen Karte durchgeführt. Insbesondere wird auf Basis dieses Kartenabgleichs eine aktuelle globale Position des Fahrzeugs 1 bestimmt.

In einer weiteren vorteilhaften Ausführung wird die Art einer Positionsabweichung analysiert und abhängig davon die Fehlerstatistik bestimmt. Insbesondere wird bei dieser Analyse die Orientierung der Positionsabweichung und/oder der Abstand der Erfassungseinheit 4 von der Landmarke S, A, G, B, V berücksichtigt.

Es ist auch möglich, dass ein mehrmaliges Durchführen der Schritte für die ausgewählte Landmarke und ein Erzeugen von mehreren Positionsabweichungen dieser Landmarke durchgeführt wird. Ebenso ist es möglich, dass die Schritte für mehrere verschiedene ausgewählte Landmarken durchgeführt werden können und diesbezüglich Positionsabweichungen bestimmt werden und dann die Genauigkeit der Positionsbestimmung überprüft wird.

Zum Auswerten können die Informationen einem Auswertemodul des Bewertungssystem 6 zugeführt werden.

### Bezugszeichenliste

- 1: Fahrzeug
- 2: Verkehrsweg
- 3: Umgebung
- 4: Erfassungseinheit
- 5: Auswerteeinheit
- 6: Bewertungssystem
- 7: digitale Karte
- 8: Datenbank
- 9: Backend
- A: Ampel
- B: Baum
- G: Gebäude
- P: Pfeil
- S: Straßenlaterne
- V: Verkehrsschild
- S1: Schritt
- S2: Schritt
- S3: Schritt
- S4: Schritt
- S5: Schritt
- S6: Schritt
- S7: Schritt
- S8: Schritt

## Patentansprüche

1. Verfahren zum Beurteilen einer Genauigkeit einer Positionsbestimmung einer Landmarke (A, B, G, S, V) in einer Umgebung (3) eines Fahrzeugs (1), bei welchem folgende Schritte durchgeführt werden:
- Erfassen der aktuellen Umgebung (3) des Fahrzeugs (1) mit zumindest einer Erfassungseinheit (4) des Fahrzeugs (1) in einem Erfassungsvorgang;
- Erstellen einer relativen Karte der Umgebung (3) auf Basis der erfassten Informationen mit relativen Positionen von erfassten Landmarken (A, B, G, S, V) in der Umgebung (3), wobei eine relative Position eine Position im Koordinatensystem des Fahrzeugs (1) ist;
- Bereitstellen einer globalen Karte (7) der Umgebung (3) mit globalen Positionen von Landmarken (A, B, G, S, V);
- Auswählen zumindest einer erfassten Landmarke (A, B, G, S, V), die auch in der globalen Karte vorhanden ist, durch ein elektronisches Bewertungssystem (6) ;
- Berechnen der globalen Position dieser ausgewählten Landmarke (A, B, G, S, V) abhängig von Positionen anderer Landmarken, die bei dem Erfassungsvorgang erfasst wurden und/oder bei einem anderen Erfassungsvorgang erfasst wurden, durch das elektronische Bewertungssystem (6), wobei dazu die ausgewählte Landmarke (A, B, G, S, V) unberücksichtigt bleibt;
- Vergleichen der globalen Position der ausgewählten Landmarke (A, B, G, S, V) in der globalen Karte (7) mit der berechneten globalen Position dieser Landmarke (A, B, G, S, V) und Bestimmen einer Positionsabweichung zwischen der globalen Position und der berechneten Position durch das elektronische Bewertungssystem (6);
- Berücksichtigen der Positionsabweichung für die Beurteilung der Genauigkeit der Positionsbestimmung der Landmarke (A, B, G, S, V) durch das elektronische Beurteilungssystem (6).

2. Verfahren nach Anspruch 1, wobei die zu beurteilende Landmarke (A, B, G, S, V) nach einem Zufallsprinzip von dem elektronischen Bewertungssystem (6) ausgewählt wird.

3. Verfahren nach Anspruch 1 oder 2, wobei abhängig von der Positionsabweichung eine Aktualisierungs-Hypothese für die ausgewählte Landmarke (A, B, G, S, V) erzeugt wird und die Aktualisierungs-Hypothese für die Beurteilung der Genauigkeit der Positionsbestimmung der Landmarke (A, B, G, S, V) berücksichtigt wird, wobei eine Aktualisierungs-Hypothese ein mögliches Aktualisierungserfordernis der globalen Position der Landmarke (A, B, G, S, V) in einer digitalen Karte (7) beschreibt, insbesondere ein mögliches Aktualisierungserfordernis der digitalen globalen Karte (7) beschreibt.

4. Verfahren nach einem der vorhergehenden Ansprüche, wobei zeitlich nacheinander und/oder gleichzeitig zumindest zwei verschiedene Landmarken (A, B, G, S, V) ausgewählt werden und aus der globalen Karte (7) entfernt werden, wobei für die zumindest zwei verschiedenen Landmarken (A, B, G, S, V) die jeweilige globale Position, ohne die jeweilige globale Position dieser Landmarken (A, B, G, S, V) aus der digitalen Karte (7) zu berücksichtigen, berechnet wird und die berechnete globale Position mit der globalen Position in der globalen Karte (7) verglichen und eine Positionsabweichung bestimmt wird, wobei die Positionsabweichungen für die Beurteilung der Genauigkeit der Positionsbestimmung der Landmarken (A, B, G, S, V) berücksichtigt werden.

5. Verfahren nach Anspruch 4, wobei auf Basis der mehreren Positionsabweichungen eine Fehlerstatistik erzeugt wird, die Fehlerstatistik ausgewertet wird und abhängig von der Auswertung der Fehlerstatistik für die Genauigkeit der Positionsbestimmung ein Gütemaß für die Positionsabweichungen bestimmt wird.

6. Verfahren nach Anspruch 5, wobei die Fehlerstatistik dahingehend ausgewertet wird, ob die Positionsabweichungen auf einem Fehler der Erfassungseinheit (4) beruhen, wobei die Verwendung zumindest einer Landmarke (A, B, G, S, V), insbesondere die Verwendung der digitalen Karte (7), für eine Eigenlokalisierung des Fahrzeugs (1), insbesondere unter Berücksichtigung eines Korrekturfehlers, bejaht wird, wenn die Positionsabweichungen auf einem Fehler der Erfassungseinheit (4) beruhen.

7. Verfahren nach Anspruch 5 oder 6, wobei bei einem Auftreten einer Positionsabweichung zwischen einer globalen Position und der berechneten globalen Position einer Landmarke (A, B, G, S, V) diese Positionsabweichung als Fehlerterm gebildet wird, der der Fehlerstatistik bereitgestellt wird und für das Gütemaß berücksichtigt wird.

8. Verfahren nach einem der vorhergehenden Ansprüche 5 bis 7, wobei bei dem Auswerten der Fehlerstatistik ein gemittelter Fehler für das gesamte System vorgegeben wird, wobei Fehlerterme, die die Positionsabweichungen charakterisieren, gemittelt werden und der gemittelte Fehler mit dem gemittelten Fehlerterm verglichen wird, und abhängig von dem Vergleich beurteilt wird, ob zumindest eine der ausgewählten Landmarken (A, B, G, S, V), insbesondere auch eine dazu gebildete Aktualisierungs-Hypothese, für die digitalen Karte (7), insbesondere die gesamte digitale Karte (7), und/oder für eine Eigenlokalisierung des Fahrzeugs (1) tauglich ist.

9. Verfahren nach einem der vorhergehenden Ansprüche 5 bis 8, wobei die Art einer Positionsabweichung einer ausgewählten Landmarke (A, B, G, S, V) analysiert wird und abhängig davon die Fehlerstatistik bestimmt wird.

10. Verfahren nach Anspruch 9, wobei bei dieser Analyse die Orientierung der Positionsabweichung und/oder der Abstand der Erfassungseinheit (4) von der Landmarke (A, B, G, S, V) als Arten der Positionsabweichung berücksichtigt wird.

11. Verfahren nach einem der vorhergehenden Ansprüche, wobei der Bewertungsprozess vollständig im Fahrzeug (1) selbst durchgeführt wird.

12. Verfahren nach einem der vorhergehenden Ansprüche 1 bis 10, wobei ein Bewertungsergebnis zur Positionsabweichung des Bewertungsprozesses, welches im Fahrzeug (1) erzeugt wurde, an ein zum Fahrzeug (1) externes Backend (8) übertragen wird, wobei im Backend (8) Bewertungsergebnisse einer Fahrzeugflotte mit mehreren Fahrzeugen abgelegt sind, wobei im Backend (8) das Bewertungsergebnis mit den Bewertungsergebnissen der Fahrzeugflotte verglichen wird und abhängig von dem Vergleich ein End-Bewertungsergebnis erzeugt wird, welches dem Fahrzeug (1) bereitgestellt wird.

13. Verfahren zur Eigenlokalisierung eines Fahrzeugs (1), bei welchem die globale Position des Fahrzeugs (1) abhängig von zumindest einer Landmarke (A, B, G, S, V) bestimmt wird, wobei die Tauglichkeit der Verwendung der Landmarke (A, B, G, S, V) für die Eigenlokalisierung abhängig von einem Verfahren nach einem der Ansprüchen 1 bis 12 bewertet wird.

14. Verfahren nach Anspruch 13, wobei dann, wenn eine ausgewählte Landmarke (A, B, G, S, V) bezüglich ihrer globalen Position als tauglich beurteilt wird, die digitale Karte (7) mit zumindest dieser Landmarke (A, B, G, S, V) aktualisiert wird.

15. Bewertungssystem (6) zum Bewerten einer Landmarke (A, B, G, S, V), mit einer Erfassungseinheit (4) eines Fahrzeugs (1) und mit einer Auswerteeinheit (5), wobei das Bewertungssystem (6) zum Durchführen eines Verfahrens nach einem der vorhergehenden Ansprüche ausgebildet ist.

## Claims

1. A method for assessing an accuracy of a position determination of a landmark (A, B, G, S, V) in an environment (3) of a vehicle (1), in which the following steps are performed:
- capturing the current environment (3) of the vehicle (1) with at least one capturing unit (4) of the vehicle (1) in a capturing operation;
- creating a relative map of the environment (3) based on the captured information with relative positions of captured landmarks (A, B, G, S, V) in the environment (3), wherein a relative position is a position in the coordinate system of the vehicle (1);
- providing a global map (7) of the environment (3) with global positions of landmarks (A, B, G, S, V);
- selecting at least one captured landmark (A, B, G, S, V), which is also present in the global map, by an electronic evaluation system (6);
- calculating the global position of this selected landmark (A, B, G, S, V) depending on positions of other landmarks, which have been captured in the capturing operation and/or have been captured in another capturing operation, by the electronic evaluation system (6), wherein the selected landmark (A, B, G, S, V) remains unconsidered thereto;
- comparing the global position of the selected landmark (A, B, G, S, V) in the global map (7) to the calculated global position of this landmark (A, B, G, S, V) and determining a position deviation between the global position and the calculated position by the electronic evaluation system (6);
- considering the position deviation for assessing the accuracy of the position determination of the landmark (A, B, G, S, V) by the electronic assessing system (6).

2. The method according to claim 1, wherein the landmark (A, B, G, S, V) to be assessed is randomly selected by the electronic evaluation system (6).

3. The method according to claim 1 or 2, wherein an update hypothesis is generated for the selected landmark (A, B, G, S, V) depending on the position deviation and the update hypothesis is considered for assessing the accuracy of the position determination of the landmark (A, B, G, S, V), wherein an update hypothesis describes a possible update requirement of the global position of the landmark (A, B, G, S, V) in a digital map (7), in particular describes a possible update requirement of the digital global map (7).

4. The method according to any one of the preceding claims, wherein at least two different landmarks (A, B, G, S, V) are selected one after the other in time and/or at the same time and are removed from the global map (7), wherein the respective global position is calculated for the at least two different landmarks (A, B, G, S, V) without considering the respective global position of these landmarks (A, B, G, S, V) from the digital map (7), and the calculated global position is compared to the global position in the global map (7) and a position deviation is determined, wherein the position deviations are considered for assessing the accuracy of the position determination of the landmarks (A, B, G, S, V).

5. The method according to claim 4, wherein error statistics are generated based on the multiple position deviations, the error statistics are evaluated and a measure of quality is determined for the position deviations depending on the evaluation of the error statistics for the accuracy of the position determination.

6. The method according to claim 5, wherein the error statistics are evaluated to the effect if the position deviations are based on an error of the capturing unit (4), wherein the use of at least one landmark (A, B, G, S, V), in particular the use of the digital map (7), is affirmed for a self-localization of the vehicle (1), in particular considering a correction error, if the position deviations are based on an error of the capturing unit (4).

7. The method according to claim 5 or 6, wherein upon occurrence of a position deviation between a global position and the calculated global position of a landmark (A, B, G, S, V), this position deviation is formed as an error term, which is provided to the error statistics and is considered for the measure of quality.

8. The method according to any one of the preceding claims 5 to 7, wherein upon the evaluation of the error statistics, an averaged error is preset for the entire system, wherein error terms, which characterize the position deviations, are averaged and the averaged error is compared to the averaged error term, and it is assessed depending on the comparison if at least one of the selected landmarks (A, B, G, S, V), in particular also an update hypothesis formed thereto, is suitable for the digital map (7), in particular the entire digital map (7), and/or for a self-localization of the vehicle (1).

9. The method according to any one of the preceding claims 5 to 8, wherein the type of a position deviation of a selected landmark (A, B, G, S, V) is analyzed and the error statistics are determined depending thereon.

10. The method according to claim 9, wherein the orientation of the position deviation and/or the distance of the capturing unit (4) from the landmark (A, B, G, S, V) are considered as types of the position deviation in this analysis.

11. The method according to any one of the preceding claims, wherein the evaluation process is performed completely in the vehicle (1) itself.

12. The method according to any one of the preceding claims 1 to 10, wherein an evaluation result to the position deviation of the evaluation process, which has been generated in the vehicle (1), is transferred to a backend (8) external to the vehicle (1), wherein evaluation results of a vehicle fleet with multiple vehicles are stored in the backend (8), wherein the evaluation result is compared to the evaluation results of the vehicle fleet and a final evaluation result is generated depending on the comparison in the backend (8), which is provided to the vehicle (1).

13. A method for self-localization of a vehicle (1), in which the global position of the vehicle (1) is determined depending on at least one landmark (A, B, G, S, V), wherein the suitability of the use of the landmark (A, B, G, S, V) for the self-localization is evaluated depending on a method according to any one of claims 1 to 12.

14. The method according to claim 13, wherein, if a selected landmark (A, B, G, S, V) is assessed as suitable with respect to its global position, the digital map (7) is updated with at least this landmark (A, B, G, S, V).

15. An evaluation system (6) for evaluating a landmark (A, B, G, S, V), comprising a capturing unit (4) of a vehicle (1) and comprising an evaluation unit (5), wherein the evaluation system (6) is formed for performing a method according to any one of the preceding claims.

## Revendications

1. Procédé d'évaluation de la précision d'une détermination de position d'un repère (A, B, G, S, V) dans un environnement (3) d'un véhicule (1), dans lequel les étapes suivantes sont effectuées :
- détection de l'environnement actuel (3) du véhicule (1) au moyen d'au moins une unité de détection (4) du véhicule (1) lors d'une opération de détection ;
- création d'une carte relative de l'environnement (3) sur la base des informations détectées comportant des positions relatives de repères détectés (A, B, G, S, V) dans l'environnement (3), une position relative étant une position dans le système de coordonnées du véhicule (1) ;
- fourniture d'une carte globale (7) de l'environnement (3) comportant des positions globales de repères (A, B, G, S, V) ;
- sélection, par un système d'évaluation électronique (6), d'au moins un repère (A, B, G, S, V) détecté qui est également présent sur la carte globale ;
- calcul, par le système d'évaluation électronique (6), de la position globale dudit repère sélectionné (A, B, G, S, V) en fonction de positions d'autres repères qui ont été détectés lors de l'opération de détection et/ou qui ont été détectés lors d'une autre opération de détection, dans lequel, à cet effet, le repère sélectionné (A, B, G, S, V) reste ignoré ;
- comparaison de la position globale du repère sélectionné (A, B, G, S, V) sur la carte globale (7) à la position globale calculée dudit repère (A, B, G, S, V) et détermination d'un écart de position entre la position globale et la position calculée par le système d'évaluation électronique (6) ;
- prise en compte de l'écart de position pour l'évaluation de la précision de la détermination de position du repère (A, B, G, S, V) par le système électronique d'évaluation (6).

2. Procédé selon la revendication 1, dans lequel le repère (A, B, G, S, V) à évaluer est sélectionné de manière aléatoire par le système d'évaluation électronique (6).

3. Procédé selon la revendication 1 ou 2, dans lequel une hypothèse de mise à jour est générée pour le repère (A, B, G, S, V) sélectionné en fonction de l'écart de position et l'hypothèse de mise à jour est prise en compte pour l'évaluation de la précision de la détermination de position du repère (A, B, G, S, V), une hypothèse de mise à jour décrivant un besoin éventuel de mise à jour de la position globale du repère (A, B, G, S, V) dans une carte numérique (7), et décrivant en particulier un besoin éventuel de mise à jour de la carte numérique globale (7) .

4. Procédé selon l'une des revendications précédentes, dans lequel au moins deux repères (A, B, G, S, V) différents sont sélectionnés successivement et/ou simultanément et supprimés de la carte globale (7), dans lequel, pour lesdits au moins deux repères différents (A, B, G, S, V), la position globale respective est calculée sans prendre en compte la position globale respective desdits repères (A, B, G, S, V) à partir de la carte numérique (7) et la position globale calculée est comparée à la position globale dans la carte globale (7) et un écart de position est déterminé, dans lequel les écarts de position sont pris en compte pour évaluer la précision de la détermination de position des repères (A, B, G, S, V) .

5. Procédé selon la revendication 4, dans lequel une statistique d'erreurs est générée sur la base de la pluralité d'écarts de position, la statistique d'erreurs est évaluée et une mesure de qualité pour les écarts de position est déterminée en fonction de l'évaluation de la statistique d'erreurs pour la précision de la détermination de position.

6. Procédé selon la revendication 5, dans lequel la statistique d'erreurs est évaluée pour savoir si les écarts de position sont dus à une erreur de l'unité de détection (4), dans lequel l'utilisation d'au moins un repère (A, B, G, S, V), notamment l'utilisation de la carte numérique (7), pour une localisation autonome du véhicule (1), en particulier en tenant compte d'une erreur de correction, est validée si les écarts de position sont dus à une erreur de l'unité d'acquisition (4) .

7. Procédé selon la revendication 5 ou 6, dans lequel, en cas d'apparition d'un écart de position entre une position globale et la position globale calculée d'un repère (A, B, G, S, V), ledit écart de position est établi en tant que terme d'erreur qui est fourni à la statistique d'erreurs et qui est pris en compte pour la mesure de qualité.

8. Procédé selon l'une des revendications précédentes 5 à 7, dans lequel, lors de l'évaluation de la statistique d'erreurs, une erreur moyenne est prédéfinie pour l'ensemble du système, dans lequel des termes d'erreur caractérisant les écarts de position sont moyennés et l'erreur moyennée est comparée au terme d'erreur moyenné et, selon la comparaison, il est jugé si au moins l'un des repères sélectionnés (A, B, G, S, V), notamment également une hypothèse de mise à jour établie à cet effet, est approprié pour la carte numérique (7), notamment l'ensemble de la carte numérique (7), et/ou pour une localisation autonome du véhicule (1).

9. Procédé selon l'une des revendications précédentes 5 à 8, dans lequel le type d'écart de position d'un repère (A, B, G, S, V) sélectionné est analysé et la statistique d'erreurs est déterminée en fonction de celui-ci.

10. Procédé selon la revendication 9, dans lequel, lors de ladite analyse, l'orientation de l'écart de position et/ou la distance de l'unité de détection (4) par rapport au repère (A, B, G, S, V) sont prises en compte en tant que types d'écart de position.

11. Procédé selon l'une des revendications précédentes, dans lequel le processus d'évaluation est entièrement réalisé dans le véhicule (1) lui-même.

12. Procédé selon l'une des revendications 1 à 10 précédentes, dans lequel un résultat d'évaluation de l'écart de position du processus d'évaluation, qui a été généré dans le véhicule (1), est transmis à un backend (8) externe au véhicule (1), dans lequel des résultats d'évaluation d'une flotte de véhicules comprenant plusieurs véhicules sont stockés dans le backend (8), dans lequel le résultat d'évaluation est comparé dans le backend (8) aux résultats d'évaluation de la flotte de véhicules et, selon la comparaison, un résultat d'évaluation final est généré, lequel est fourni au véhicule (1).

13. Procédé de localisation autonome d'un véhicule (1), dans lequel la position globale du véhicule (1) est déterminée en fonction d'au moins un repère (A, B, G, S, V), dans lequel la pertinence de l'utilisation du repère (A, B, G, S, V) pour la localisation autonome est évaluée en fonction d'un procédé selon l'une des revendications 1 à 12.

14. Procédé selon la revendication 13, dans lequel, lorsqu'un repère sélectionné (A, B, G, S, V) est jugé apte à être utilisé en ce qui concerne sa position globale, la carte numérique (7) est mise à jour avec au moins ce repère (A, B, G, S, V).

15. Système d'évaluation (6) destiné à évaluer un repère (A, B, G, S, V), comportant une unité de détection (4) d'un véhicule (1) et une unité d'évaluation (5), dans lequel le système d'évaluation (6) est conçu pour mettre en œuvre un procédé selon l'une des revendications précédentes.
